# EUROPEAN PATENT APPLICATION

(11) **EP 4 797 526 A2**
(43) Date of publication of application: **26.08.2026**
(21) Application number: 26160395.5
(22) Date of filing: 24.02.2026
(51) Int. Cl.: H02P 6/08, H02P 27/08

(54) **MOTOR-DRIVE FOR POWER TOOLS**

(30) Priority: 25.02.2025 US 202563762913 P
(71) Applicant: Milwaukee Electric Tool Corporation, Brookfield, WI 53005-2550 (US)
(72) Inventor: Strandt, Andrew P., Brookfield, WI 53005 (US); Truettner, Donald J., Brookfield, WI 53005 (US); Obermann, Timothy R., Brookfield, WI 53005 (US)
(74) Representative: Grünecker Patent- und Rechtsanwälte PartG mbB

(57) **Abstract**

Power tools and methods for motor control. One embodiment provides a power tool including a motor (400), an inverter bridge (228) electrically connected between the power input (340) and the motor (400) including a plurality of switches including wide bandgap transistors. The power tool further includes a controller configured to drive the motor using the power switching network, a pulse width modulation (PWM) generator (276) configured to generate an interrupt at a predefined interval, and a current detector (236) configured to sample a phase current of the motor in response to the interrupt.

## Description

### RELATED APPLICATIONS

This application claims the benefit of U.S. Provisional Patent Application No. 63/762,913, filed February 25, 2025, the entire content of which is incorporated herein by reference.

### FIELD OF INVENTION

The present disclosure relates to motor drives for a power tool.

### SUMMARY

The use of brushless direct-current (BLDC) motors and/or permanent magnet synchronous motors (PMSMs) in power tools provides efficiency and power output improvements. These motors are powered by a power switching network (e.g., an inverter bridge) including power switching elements. A controller of the power tool controls the power switching elements that make up the power switching network, for example, using pulse-width modulated (PWM) drive signals to operate the motor. The duty cycle of the PWM signals can be varied to vary the speed of rotation of the motor.

High switching frequencies are desired to efficiently control operation of a motor. Metal-oxide-semiconductor field effect transistors (MOSFETs) are semiconductor transistor switches that are typically used in motor applications. The advantage of using such FETs as electrical switches in motor applications is establishing a system with low internal resistance components that have a near zero voltage drop across them. Furthermore, these semiconductor switches have a high switching rate and are known to operate better than other types of transistors, e.g., bipolar junction transistors (BJTs). However, there are yet other semiconductors that can perform better than MOSFETs when it comes to electric switching. Wide Bandgap Semiconductor (WBS) field effect transistors (FETs), for example, Gallium Nitride (GaN) high electron mobility transistors (HEMTs), have less internal resistance and switch at a higher frequency than MOSFETs. Therefore, WBS FETs would be further advantageous for operating BLDC and PMSM motors.

Another consideration for the operation of motors in power tools is the method of motor control executed by a controller of the power tool. Block commutation, also known in the art as six-step commutation, although a common way to control motors, is not as efficient as other control methods because of the following characteristics: torque ripple due to abrupt current transitions between phases, low control at high speeds, and a simple control algorithm that limits performance in applications requiring smooth and accurate motor operation, such as operation of a power tool. Field-oriented control (FOC) is a method for controlling a motor that has higher efficiency, less noise and vibration, and solves many of the previously mentioned faults of the six-step commutation motor control method. FOC uses a current value recorded from the phases of the motor and the reference current from the applied throttle to calculate an error between the expected and actual current values. The control system sends the error to a transform block, which generates a voltage signal based on a current error from a current regulator. The voltage signal is used as an input to the inverter to correct discrepancies.

Current may be detected using one or more current sensors provided between the inverter bridge and the motor. The current sensors include, for example, a shunt resistor connected in the current path. The voltage drop across the shunt resistor is used to determine the current. The voltage drop across the shunt resistor is an analog signal. An analog-to-digital converter (ADC) may be connected between the current sensor and the motor controller to convert the analog signal to a digital signal for use by the motor controller in operating the motor as described above. The ADC is a digital circuit that operates at a clock frequency (or switching frequency) based on a clock signal provided to the ADC. The ADC samples the voltage drop or current signal at every, for example, falling edge or rising edge of the clock signal.

In one example, motor drive systems may use an ordinary single synchronous sample-single update (SSSU) digital motor control algorithm execution to sample the current of the motor. In SSSU, the current is sampled at the clock frequency or switching frequency. In some examples, motor drive systems may use a single synchronous sample-multiple update (SSMU) digital motor control algorithm to sample the current of the motor. In SSMU, the current is sampled at a positive integer multiple (greater than 1) of the clock frequency or switching frequency. Use of SSMU is advantageous over ordinary SSSU as it enables implementation of high PWM frequencies without the controller being overrun by sampling the current and running FOC computations less than every PWM cycle.

The motor drive systems may include a component of the controller or a peripheral component of the controller (e.g., PWM counter) that is configured to count the PWM cycle of a PWM generator and trigger an interrupt signal. The interrupt may be provided to the controller or the ADC to start sampling the current of the motor. In one example, the PWM control of the motor is configured in a way that when the PWM counter reaches a PWM counter period value (e.g., set to the PWM switching frequency or clock frequency), sampling of the current of the motor through one or more current sensor(s) may be triggered (that is, SSSU current sampling). In this example, current is detected at least once for every PWM time period. In other examples, the PWM control of the motor is configured in a way that sampling of the current of the motor through the one or more current sensor(s) is triggered when the PWM counter reaches a multiple (that is, an integer multiple greater than one) of the PWM counter period value (e.g., set to the PWM switching frequency or clock frequency) (that is, SSMU current sampling). The interrupt signal may be generated in the middle of the PWM time period such that the current values are settled (i.e., no switching transients) before being measured.

Current detection methods of this application include, but are not limited to, phase sensing, three low-side shunt sensing, single low-side shunt sensing, or the like.

One advantage of the techniques described herein may include the use of wide bandgap (WBG) and/or high electron mobility transistor (HEMT) switching elements at their advantageous high switching frequencies and the use of standard industrial low-cost microcontroller units (MCUs) without overly high interrupt utilization.

Before any embodiments are explained in detail, it is to be understood that the embodiments are not limited in application to the details of the configurations and arrangements of components set forth in the following description or illustrated in the accompanying drawings. The embodiments are capable of being practiced or of being carried out in various ways. Also, it is to be understood that the phraseology and terminology used herein are for the purpose of description and should not be regarded as limiting. The use of "including," "comprising," or "having" and variations thereof are meant to encompass the items listed thereafter and equivalents thereof as well as additional items. Unless specified or limited otherwise, the terms "mounted," "connected," "supported," and "coupled" and variations thereof are used broadly and encompass both direct and indirect mountings, connections, supports, and couplings.

Unless the context of their usage unambiguously indicates otherwise, the articles "a," "an," and "the" should not be interpreted as meaning "one" or "only one." Rather, these articles should be interpreted as meaning "at least one" or "one or more." Likewise, when the terms "the" or "said" are used to refer to a noun previously introduced by the indefinite article "a" or "an," "the" and "said" mean "at least one" or "one or more" unless the usage unambiguously indicates otherwise.

In addition, it should be understood that embodiments may include hardware, software, and electronic components or modules that, for purposes of discussion, may be illustrated and described as if the majority of the components were implemented solely in hardware. However, one of ordinary skill in the art, and based on a reading of this detailed description, would recognize that, in at least one embodiment, the electronic-based aspects may be implemented in software (e.g., stored on a non-transitory computer-readable medium) executable by one or more processing units, such as a microprocessor and/or application specific integrated circuits ("ASICs"). As such, it should be noted that a plurality of hardware and software based devices, as well as a plurality of different structural components, may be utilized to implement the embodiments. For example, "servers," "computing devices," "controllers," "processors," etc., described in the specification can include one or more processing units, one or more computer-readable medium modules, one or more input/output interfaces, and various connections (e.g., a system bus) connecting the components.

Relative terminology, such as, for example, "about," "approximately," "substantially," etc., used in connection with a quantity or condition would be understood by those of ordinary skill to be inclusive of the stated value and has the meaning dictated by the context (e.g., the term includes at least the degree of error associated with the measurement accuracy, tolerances [e.g., manufacturing, assembly, use, etc.] associated with the particular value, etc.). Such terminology should also be considered as disclosing the range defined by the absolute values of the two endpoints. For example, the expression "from about 2 to about 4" also discloses the range "from 2 to 4". The relative terminology may refer to plus or minus a percentage (e.g., 1%, 5%, 10%) of an indicated value.

It should be understood that although certain drawings illustrate hardware and software located within particular devices, these depictions are for illustrative purposes only. Functionality described herein as being performed by one component may be performed by multiple components in a distributed manner. Likewise, functionality performed by multiple components may be consolidated and performed by a single component. In some embodiments, the illustrated components may be combined or divided into separate software, firmware, and/or hardware. For example, instead of being located within and performed by a single electronic processor, logic and processing may be distributed among multiple electronic processors. Regardless of how they are combined or divided, hardware and software components may be located on the same computing device or may be distributed among different computing devices connected by one or more networks or other suitable communication links. Similarly, a component described as performing particular functionality may also perform additional functionality not described herein. For example, a device or structure that is "configured" in a certain way is configured in at least that way but may also be configured in ways that are not explicitly listed.

Accordingly, in the claims, if an apparatus, method, or system is claimed, for example, as including a controller, control unit, electronic processor, computing device, logic element, module, memory module, communication channel, or network, or other element configured in a certain manner, for example, to perform multiple functions, the claim or claim element should be interpreted as meaning one or more of such elements where any one of the one or more elements is configured as claimed, for example, to make any one or more of the recited multiple functions, such that the one or more elements, as a set, perform the multiple functions collectively.

Other aspects of the embodiments will become apparent by consideration of the detailed description and accompanying drawings.

### BRIEF DESCRIPTION OF THE DRAWINGS

FIG. 1 is a perspective view of a power tool, according to some embodiments.
FIG. 2 illustrates a battery pack, according to some embodiments.
FIG. 3 is a simplified block diagram of the power tool of FIG. 1, according to some embodiments.
FIG. 4 is a block diagram for a control system for a power switching network of the power tool of FIG. 1, according to some embodiments.
FIG. 5 illustrates a simplified block diagram of a controller topology for implementing the field-oriented control motor drive technique for the power tool of FIG. 1, according to some embodiments.
FIG. 6 is a flowchart of a method for controlling a motor of the power tool of FIG. 1, according to some embodiments.
FIG. 7 is a block diagram of a method for sampling the currents of a motor and a graph of a PWM counter, according to some embodiments.

### DETAILED DESCRIPTION

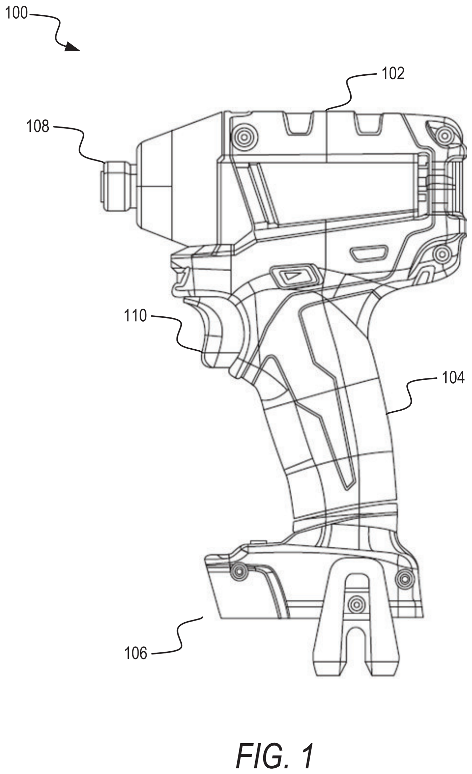

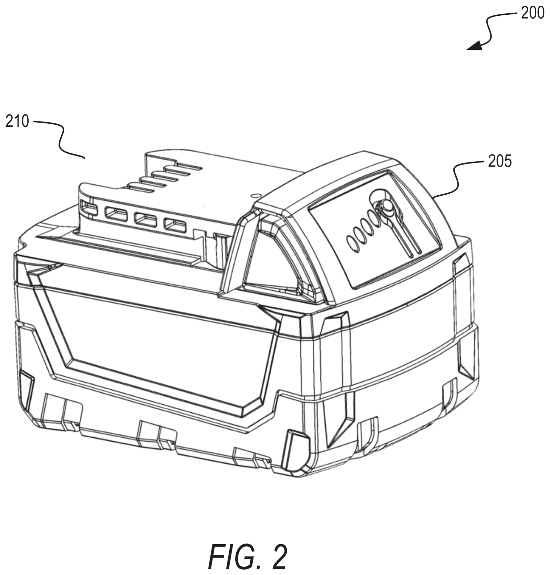

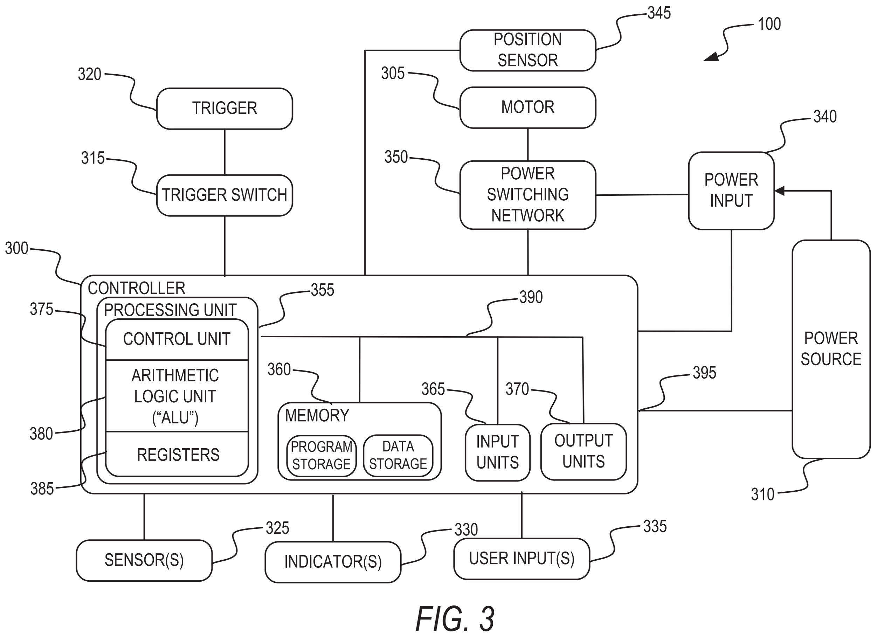

FIG. 1 illustrates an embodiment of a power tool 100. The power tool 100 is, for example, an impact driver including an upper main body 102, a handle 104, a battery pack receiving portion 106, an output drive device or mechanism 108, and a trigger 110. The power tool 100 further includes a motor, such as motor 305 (FIG. 3) within the main body 102 of the housing and having a rotor and a stator. The rotor is coupled to a motor shaft arranged to produce an output outside of the housing via the output drive device or mechanism 108. The housing of the power tool 100 (e.g., the main body 102 and the handle 104) is composed of a durable and lightweight plastic material. The drive device 108 is composed of a metal (e.g., steel) output spindle. The battery pack receiving portion 106 is configured to receive and couple to a battery pack, such as a battery pack 200 (FIG. 2) that provides power to the power tool 100. The battery pack receiving portion 106 includes a connecting structure to engage a mechanism that secures the battery pack 200 and a terminal block to electrically connect the battery pack 200 to the power tool 100.

FIG. 1 illustrates a driver, however, the power tool 100 may include drills, circular saws, jig saws, band saws, reciprocating saws, screw drivers, angle grinders, straight grinders, hammers, multi-tools, impact wrenches, rotary hammers, impact drivers, angle drills, powered ratchets, powered torque wrenches, hydraulic pulse tools, hydraulic tensioning tools, lock bolt installation tools, reaction arm tools, riveting tools, nailers, staplers, TC bolt guns, portable power source that converts battery power to AC output using an inverter, and the like.

FIG. 2 illustrates a battery pack 200, according to some embodiments. The battery pack 200 is a power tool battery pack that is generally used to power a power tool, such as the power tool 100. The battery pack 200 includes a housing 205 and an interface portion 210 for connecting the battery pack 200 to a device (e.g., the power tool 100). In some embodiments, the battery pack 200 includes lithium-ion battery cells. In other embodiments, the battery pack 200 may be of a different chemistry, for example, nickel-cadmium, nickel-metal hydride, and the like. In the illustrated embodiment, the battery pack 200 is an 18-volt battery pack. In other embodiments, the output voltage level of the battery pack 200 may be different. For example, the battery pack 200 can be a 4-volt battery pack, a 28-volt battery pack, a 36-volt battery pack, a 72-volt battery pack, or another voltage (voltage here may refer to nominal voltage). The battery pack 200 may also have various capacities (e.g., 3, 4, 5, 6, 8, or 12 ampere-hours).

The battery pack 200 also includes terminals to connect to the power tool 100. The terminals for the battery pack 200 include a positive and a negative terminal to provide power to and from the battery pack 200. In some embodiments, the battery pack 200 also includes data terminals to communicate with the power tool 100. For example, the battery pack 200 may include a microcontroller to monitor one or more characteristics of the battery pack 200, and the data terminals may communicate with the power tool 100 regarding the monitored characteristics.

FIG. 3 is a simplified block diagram of a control system of the power tool 100 of FIG. 1, according to some embodiments. The control system includes a controller 300. The controller 300 is electrically and/or communicatively connected to a variety of modules or components of the power tool 100. For example, the illustrated controller 300 is electrically connected to a position sensor 345, a power source 310, a trigger switch 315 (connected to a trigger 320 - e.g., a variable speed trigger), one or more sensors or sensing circuits 325, one or more indicators 330, a user input module 335, a power input 340, and a power switching network 350. The controller 300 includes combinations of hardware and software that are operable to, among other things, control the operation of the power tool 100, monitor the operation of the power tool 100 using, for example, the position sensor 345 and the one or more sensors or sensing circuits, activate the one or more indicators 330 (e.g., an LED), and/or the like.

The controller 300 includes a plurality of electrical and electronic components that provide power, operational control, and protection to the components and modules within the controller 300 and/or the power tool 100. For example, the controller 300 includes, among other things, a processing unit 355 (e.g., a microprocessor, a microcontroller, or another suitable programmable device), a memory 360, input units 365, and output units 370. The processing unit 355 includes, among other things, a control unit 375, an ALU 380, and a plurality of registers 385 (shown as a group of registers in FIG. 3) and is implemented using a known computer architecture (e.g., a modified Harvard architecture, a von Neumann architecture, etc.). The processing unit 355, the memory 360, the input units 365, and the output units 370, as well as the various modules or circuits connected to the controller 300, are connected by one or more control and/or data buses (e.g., a common bus 390). The control and/or data buses are shown generally in FIG. 3 for illustrative purposes. The use of one or more control and/or data buses for the interconnection between and communication among the various modules, circuits, and components would be known to a person skilled in the art.

The memory 360 is a non-transitory computer readable medium and includes, for example, a program storage area and a data storage area. The program storage area and the data storage area can include combinations of different types of memory, such as a ROM, a RAM (e.g., DRAM, SDRAM, etc.), EEPROM, flash memory, a hard disk, an SD card, or other suitable magnetic, optical, physical, or electronic memory devices. The processing unit 355 is connected to the memory 360 and executes software instructions that are capable of being stored in a RAM of the memory 360 (e.g., during execution), a ROM of the memory 360 (e.g., on a generally permanent basis), or another non-transitory computer readable medium such as another memory or a disc. Software included in the implementation of the power tool 100 can be stored in the memory 360 of the controller 300. The software includes, for example, firmware, one or more applications, program data, filters, rules, one or more program modules, and other executable instructions. The controller 300 is configured to retrieve from the memory 360 and execute, among other things, instructions related to the control processes and methods described herein. In other constructions, the controller 300 includes additional, fewer, or different components.

In some embodiments, the power tool 100 includes a battery pack interface (not shown) including a combination of mechanical components (e.g., rails, grooves, latches, etc.) and electrical components (e.g., one or more terminals) configured to and operable for interfacing (e.g., mechanically, electrically, and communicatively connecting) the power tool 100 with the power source 310 (e.g., the battery pack 200). For example, power provided by the battery pack 200 to the power tool 100 is provided through the battery pack interface to the power input 340. The power input 340 includes combinations of active and passive components to regulate or control the power received from the battery pack 200 prior to power being provided to the controller 300. The battery pack interface also supplies power via the power input 340 to the power switching network 350 to provide power to the motor 305. The battery pack interface also includes, for example, a communication line 395 for providing a communication line or link between the controller 300 and the battery pack 200.

The indicators 330 include, for example, one or more light-emitting diodes ("LEDs"). The indicators 330 can be configured to display conditions of, or information associated with, the power tool 100. For example, the indicators 330 are configured to indicate measured electrical characteristics of the power tool 100, the status of the power tool 100, etc. The user input module 335 is operably coupled to the controller 300 to, for example, select a forward mode of operation or a reverse mode of operation, a torque and/or speed setting for the power tool 100 (e.g., using torque and/or speed switches), etc. In some embodiments, the user input module 335 includes a combination of digital and analog input or output devices required to achieve a desired level of operation for the power tool 100, such as one or more knobs, one or more dials, one or more switches, one or more buttons, etc. Although illustrated separately, the trigger switch 315 and/or the trigger 320 may be a part of the user input module 335.

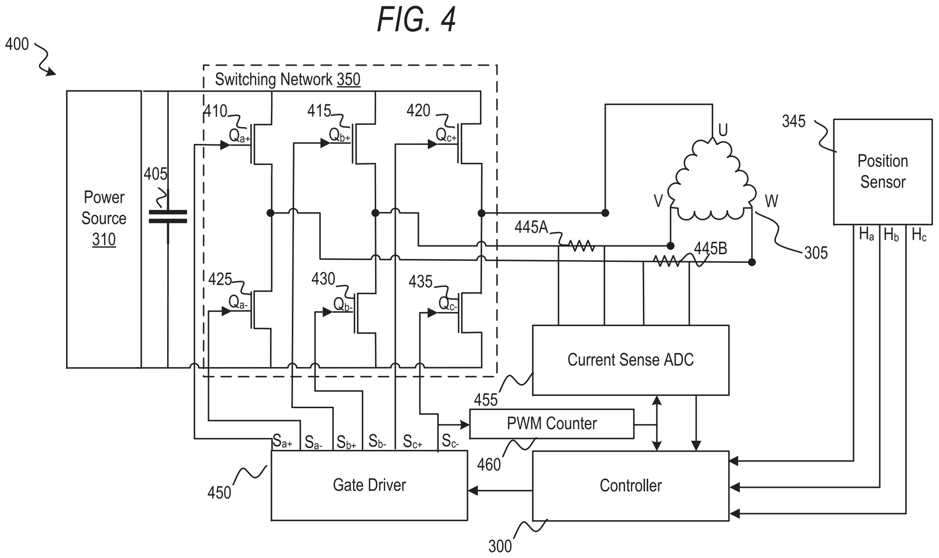

The power switching network 350 provides operating power to the motor 305 based on control signals from a motor controller, such as the controller 300. The power switching network 350 includes a plurality of electronic switches (e.g., FETs, bipolar junction transistors, and the like) connected to form a network that controls the activation of the motor 305 based on pulse-width modulated (PWM) signals. The power switching network 350 may be implemented as an inverter (e.g., a three-phase bridge as shown in FIG. 4, a two-phase bridge - e.g., an H-bridge, or the like). For instance, the power switching network 350 may receive PWM signals from the controller 300 to drive the motor 305. Generally, when the trigger 320 is depressed, electrical current is supplied from the power source 310 to the motor 305 via the power switching network 350. When the trigger 320 is not depressed, electrical current is not supplied from the power source 310 to the motor 305. For example, a trigger pull sensor senses the amount that the trigger 320 is pulled. In some examples, the output of the power switching network 350 is provided to an AC outlet to power an AC device.

The motor 305 may be energized based on a state of the trigger 320. Generally, when the trigger 320 is activated, the motor 305 is energized, and when the trigger 320 is deactivated, the motor 305 is de-energized. In the illustrated embodiment, the trigger 320 may be biased (e.g., with a biasing member such as a spring) such that the trigger 320 moves in a second direction away from the handle of the power tool 100 when the trigger 320 is released by the user. In some embodiments, the controller 300 determines a shutdown condition of the power tool 100 based on the trigger pull sensor. For example, the controller 300 may determine that the power tool 100 is no longer being operated based on a lack of input from the trigger pull sensor and/or a release of the trigger pull sensor for a predetermined amount of time. In some examples, the trigger 320 is a variable speed trigger such that the trigger switch 315 provides a signal to the controller 300 corresponding to the amount of trigger pull (e.g., the distance to which the trigger is pulled). This signal from the trigger switch 315 may be generated using, for example, a potentiometer, an inductive sensor, or the like, and provides a speed command (e.g., as a percentage of maximum speed).

The power switching network 350 is electrically connected to the motor 305. In some embodiments, the motor 305 is a brushless DC (BLDC) motor. In some embodiments, the motor 305 is a permanent magnet synchronous motor (PMSM). In some embodiments, the power source 310 is a battery pack, such as the battery pack 200. The power switching network 350 is also electrically and communicatively connected to the controller 300. One or more PWM generators 450 may also be provided between the controller 300 and the power switching network 350. In one example, a PWM generator 450 may be integrated with the FETs of the power switching network 350. The one or more PWM generators 450 receive supply voltage from the power input and the control signals from the controller 300.

FIG. 4 is a simplified block diagram of a motor drive 400 of the power tool 100, according to some embodiments. In the example illustrated, the motor drive 400 includes the power switching network 350 in a three-phase inverter bridge configuration connected between the power source 310 and the motor 305. The power source 310 provides power to the power switching network 350. The power switching network 350 is comprised of three half bridges. Each half bridge is comprised of at least two wide bandgap semiconductor FETs (WBS FETs). In the example illustrated, the power switching network 350 includes Qₐ₊ first high-side WBS FET 410, Q_{b+} second high-side WBS FET 415, Q_{c+} third high-side WBS FET 420, Qₐ₋ first low-side WBS FET 425, Q_{b-} second low-side WBS FET 430, and Q_{c-} third low-side WBS FET 435. In some examples, the high side consists of at least two WBS FETs in parallel. For example, the first high side may include three WBS FETs placed in parallel, resulting in reducing the on-state resistance to one-third of the on-state resistance of a singular WBS FET.

In one example, the WBS FETs include Gallium Nitride FETs (GaN FETs), Silicon Carbide FETs (SiC FETs), or the like. In one example, the WBS FETs are high electron mobility transistors (HEMTs), e.g., enhancement mode HEMTs (E-HEMTs) and particularly GaN HEMTs or GaN E-HEMTs. WBS FETs have a bandgap in the range of, for example, about 3-4 electron volts (eV). WBS FETs exhibit several properties that provide advantages compared to traditional field effect transistors (FETs) (e.g., MOSFETs).

The WBS FET is, for example, a three-terminal device with a source (S), drain (D), and gate (G). The structure of the WBS FET may consist of a thin GaN layer sandwiched between two layers of AlGaN (Aluminum Gallium Nitride). For example, the GaN layer acts as a channel for electrons to flow from source (S) to drain (D). The AlGaN layer acts as a barrier, reducing the electron density in the channel, allowing for better control of electron flow. The GaN HEMT may be an enhancement mode transistor such that a gate voltage (or current) is applied to the device to create a conductive channel in the GaN layer for current to flow from source to drain. Switching a transistor refers to applying voltage (or current) to a gate to either activate or de-activate the conductive channel. The GaN HEMT has high electron mobility, that is, the electrons can move faster in the channel, resulting in a higher current density than traditional silicon MOSFET devices.

The switching frequency of WBS FETs refers to the rate at which transistors may activate and de-activate. Particularly, WBS FETs can be operated at high frequencies, for example, at 100 kHz, 200 kHz, 400 kHz, and more while losing less energy as heat than MOSFETs operating at lower frequencies. WBS FETs have faster response times compared to traditional FETs. In some embodiments, GaN E-HEMTs may be used and operated at a switching frequency of at least 50 kHz. In one example, the WBS FETs are operated at a switching frequency of between 20 kHz and 100 kHz. In some examples, the WBS FETs may be operated at a switching frequency of up to 250 kHz, 400 kHz or the like. Additionally, WBS FETs may be used with a low dead time, for example, less than 100 nanoseconds. Dead time may refer to the time gap between deactivating a first WBS FET and activating a second WBS FET of the power switching network 350.

The WBS FETs are operated at high frequencies to provide higher resolution signals at the input to the motor 305. Energy storage capacity can be reduced for the same total output power rating caused by the increased frequency during operation of the wide bandgap semiconductors compared to MOSFETs. Additionally, smaller heat sinks and fans can be used because the WBS FETs operate more efficiently than MOSFETs and therefore produce less heat during operation. Accordingly, the size and weight of the components within the power tool 100 can be reduced and the efficiency of the power tool 100 can be improved by replacing MOSFETs with WBS FETs within the power switching network 350 and the controller 300.

The motor drive 400 includes a DC-link capacitor network 405 (e.g., one or more DC-link capacitors, or a plurality of DC-link capacitors) connected across the DC bus (i.e., between the positive input and the negative input to the power switching network 350). The use of WBS FETs instead of MOSFETs in the power switching network 350 permits reduction of the capacitance of the DC-link capacitor network 405, also resulting in a lower-sized DC-link capacitor network 405. In some examples, the electrolytic capacitors, typically used with MOSFETs, are replaced with ceramic capacitors. Ceramic capacitors have higher temperature ratings and lower losses compared to electrolytic capacitors. In one example, the ceramic capacitor is a multilayer ceramic capacitor (MLCC). The use of ceramic capacitors with WBS FETs allows for more power dense hardware designs. The motor drive 400 achieves significant size savings and better heat management when used in the power tool 100.

The half-bridge WBS FETs are electrically connected to different phases of the motor 305. For example, WBS FETs 410 and 425 are connected to the W phase of the motor 305, WBS FETs 415 and 430 are connected to the V phase of the motor 305, and WBS FETs 420 and 435 are connected to the U phase of the motor 305. As the motor rotates, the position sensor 345 communicates with the controller 300 such that the controller 300 can determine a rotational position of the motor 305. The position sensor 345 outputs position signals Hₐ, H_{b}, and H_{c} to the controller 300. In some embodiments, the position sensor 345 is a digital Hall effect sensor, encoder, position sensing ASICs, and the like. In other embodiments, the motor 305 is a sensorless motor and the rotor position may be detected by using various sensorless motor sensing techniques (e.g., BEMF detectors, etc.).

One or more current sensors 445 are connected in the power path to detect a current in the power path. In the example illustrated in FIG. 4, the power tool 100 includes a first current sensor 445A and a second current sensor 445B connected between the power switching network 350 and the motor 305 on two of the phase lines connecting the power switching network 350 to the motor 305 (e.g., phase sensing). In other examples, more or fewer current sensors may be provided and may be connected at different locations in the power path. For example, a current sensor 445 may be provided on all three phase lines connecting the power switching network 350 to the motor 305. One or more current sensors 445 may be connected between the one or more of the low-side FETs 425, 430, 435 and the negative DC bus (e.g., single or three low-side shunt sensing). A current sensor may be provided on one or both of the negative DC bus or the positive DC bus. In the example illustrated, the current sensors 445 are shunt resistors connected in the power path. The voltage drop across the shunt resistors (i.e., the current sensors 445) is processed and then sampled by a current sense analog-to-digital converter (ADC) 455. The analog signal is converted to a digital signal and provided to the controller 300 for implementing motor control as further described below.

The controller 300 may execute a field-oriented control (FOC) technique to control the motor 305. The controller 300 performs FOC of the motor 305 based on the position signals Hₐ, H_{b}, and H_{c} and/or the current signals. The controller 300 generates PWM output signals using the FOC. The controller 300 sends the PWM control signals to the PWM generator 450. The PWM generator 450 interprets the PWM control signals into six separate voltage switching signals (Sₐ₊, Sₐ₋, S_{b+}, S_{b-}, S_{c+}, and S_{c-}). The switching signals are pulse-width modulated (PWM) signals provided at a switching frequency to each of the WBS FETs. Each voltage switching signal is provided to a different half-bridge WBS FETs of the power switching network 350. The switching signal Sₐ₊ corresponds to the WBS FETs 410. The switching signal Sₐ₋ corresponds to the WBS FETs 425. The switching signal Sc- corresponds to the WBS FETs 415. The switching signal S_{b-} corresponds to the WBS FETs 430. The switching signal S_{c+} corresponds to the WBS FETs 420. The switching signal S_{b+} corresponds to the WBS FETs 435. Possible switching signal states are high and low. The WBS FET is conducting current from the power source 310 to the motor 305 for one state of the corresponding switching signal and not conducting current from the power source 310 to the motor 305 for the other complementary switching state of the switching signal. In the example illustrated, the PWM generator 450 is a peripheral component (e.g., MCU peripheral) of the controller 300. In other examples, the PWM generator 450 may be referred to as a gate driver or integrated into a gate driver. In yet other examples, the PWM generator 450 may be integrated into the controller 300.

A PWM counter 460 may be used to count the PWM cycles and generate interrupts. In the example illustrated, the PWM counter 460 is a separate peripheral device of the controller 300. In other examples, the PWM counter 460 may be integrated into another peripheral device, for example, the PWM generator 450, or the like. The interrupt generated by the PWM counter 460 may be provided to the controller 300 and/or the current sense ADC 455.

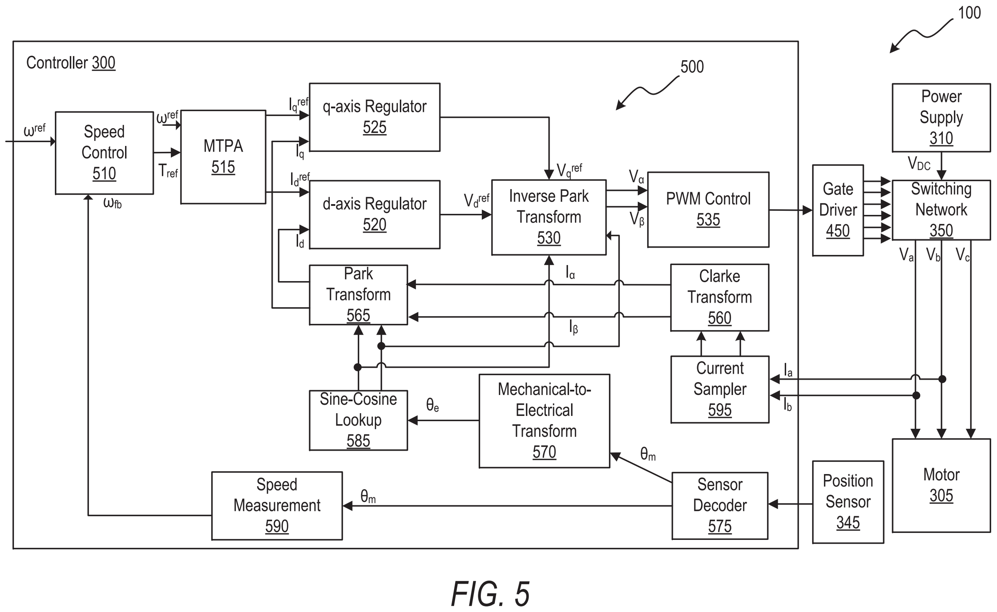

The controller 300 may use a controller topology 500 as shown in FIG. 5 to implement a FOC motor drive. The power tool 100 includes the power source 310, the PWM generator 450, the power switching network 350, the motor 305, and the position sensor 345. The controller 300 receives the position signals and the current signal from the power tool (e.g., as described with respect to FIG. 4) and provides corresponding PWM control signals to the PWM generator 450. The position sensor 345 is configured to sense the angular position of the rotor with respect to the stator. The position sensor 345 outputs the position signal to a sensor decoder 575. The sensor decoder 575 generates a mechanical rotor angle (θₘ) based on the position signal. The sensor decoder 575 outputs the mechanical rotor angle (θₘ) to a speed measurement block 590. The speed measurement block 590 calculates the speed of a rotating object, for example the motor 305. The speed measurement block 590 calculates a motor speed signal (ω_{fb}) based on the mechanical rotor angle (θₘ). For example, the speed may be calculated by using the time between successive edges of the Hall sensor signals.

The speed measurement block 590 outputs the motor speed signal (ω_{fb}) to a speed control 510 block. The speed control 510 block calculates the speed error (e.g., a difference) between the motor speed feedback signal (ω_{fb}) and a desired speed (ω_{ref}). The desired speed (ω_{ref}) is, for example, the speed command received from the variable speed trigger 320. The speed control 510 block calculates a speed error signal and generates a torque command (e.g., torque control signal (T_{ref})) based on the speed error. The speed control 510 block outputs the torque control signal (T_{ref}) to a dq-axis control reference generator block 515. In some embodiments, the dq-axis control reference generator may implement a Maximum-Torque-Per-Amp (MTPA) algorithm, a field weakening algorithm, and the like. The dq-axis control reference generator block 515 calculates d-axis and q-axis currents to produce a desired torque and speed. The d-axis is the direct axis and corresponds to the direction of the rotor flux. The q-axis is the quadrature axis and corresponds to the axis leading the d-axis by 90 degrees electrical. The q-axis corresponds to the torque-producing component of the motor 305. The dq-axis control reference generator block 515 generates a q-axis control current (I_{q}^{ref}) and a d-axis control current (I_{d}^{ref}) using the torque control signal (T_{ref}) and the desired speed (ω_{ref}). In some embodiments, the dq-axis control reference generator block 515 implements a Maximum-Torque-Per-Amp (MTPA) algorithm. For example, the dq-axis control reference generator block 515 calculates the d-axis and q-axis control currents based on mathematical formulas using the desired speed, the torque control signal, the base speed of the motor, and the like. The dq-axis control reference generator block 515 outputs the q-axis control current (I_{q}^{ref}) to a q-axis regulator 525. The dq-axis control reference generator block 515 outputs the d-axis control current (I_{d}^{ref}) to a d-axis regulator 520. In combination, the speed control 510, the dq-axis control reference generator block 515, the q-axis regulator 525, and the d-axis regulator 520 enable independent torque-speed control of the motor 305.

The sensor decoder 575 outputs the mechanical rotor angle (θₘ) to a mechanical-to-electrical transform block 570. The mechanical-to-electrical transform block 570 transforms a mechanical rotor angle (θₘ) to an electrical rotor motor angle (θₑ). The mechanical-to-electrical transform block 570 outputs the electrical rotor motor angle (θₑ) to the sine-cosine lookup block 585. The sine-cosine lookup block 585 calculates the sine of the electrical rotor motor angle (θₑ) and the cosine of the electrical rotor motor angle (θₑ). The sine and cosine of the electrical rotor motor angle (θₑ) are each output to the Park transform block 565 and the inverse Park transform block 530.

In the example illustrated, the controller 300 receives two instantaneous line currents (Iₐ and I_{b}) from the power switching network 350. In another example, a different number or set of line currents may be received as explained above. Two phases of the three-phase motor 305 produce the two line currents (Iₐ and I_{b}). The line currents are sampled by the current sampler 595 before being provided to the Clarke transform block 560. The current sampler 595 may receive the currents from the current sense ADC 455 (see FIG. 4). The Clarke transform block 560 transforms the line currents (Iₐ and Ib) into an α-β coordinate system line currents (I_{α} and Iβ). An α-β coordinate system is a simplified two-phase system for representation of the three-phase motor 305. The Clarke transform block 560 outputs the orthogonal currents (I_{α} and I_{β}) to a Park transform block 565. The Park transform block 565 receives the orthogonal line currents (I_{α} and I_{β}) and the sine and cosine signals from the sine-cosine lookup block 585. The Park transform block 565 generates orthogonal d-axis and q-axis currents (I_{d} and I_{q}) based on the orthogonal line currents (I_{α} and I_{β}) and the sine and cosine signals. The Park transform block 565 outputs a q-axis current (I_{q}) and a d-axis current (I_{d}) to the q-axis regulator 525 and the d-axis regulator 520, respectively.

The q-axis regulator 525 calculates an error between a desired q-axis current and an actual q-axis current. The q-axis regulator 525 receives the q-axis control current (I_{q}^{ref}) from the dq-axis control reference generator block 515. The q-axis regulator 525 also receives the q-axis current (I_{q}) from the Park transform block 565. The q-axis regulator 525 calculates the current error using the q-axis control current (I_{q}^{ref}) and the q-axis current (I_{q}). The q-axis regulator 525 corrects the calculated error using a proportional-integral (PI) controller. The q-axis regulator 525 outputs a q-axis voltage control signal (V_{q}^{ref}) to the inverse Park transform block 530. The d-axis regulator 520 operates similarly to the q-axis regulator 525, but instead in the d-axis. The d-axis regulator 520 receives the d-axis control current (I_{d}^{ref}) from the dq-axis control reference generator block 515. The d-axis regulator 520 receives the d-axis current (I_{d}) from the Park transform block 565. The d-axis regulator 520 calculates the current error using the d-axis control current (I_{d}^{ref}) and the d-axis current (I_{d}). The d-axis regulator 520 outputs a d-axis voltage control signal (V_{d}^{ref}) to the inverse Park transform block 530. The inverse Park transform block 530 converts the q-axis voltage control signal (V_{q}^{ref}) and the d-axis voltage control signal (V_{d}^{ref}) to simplified α-β orthogonal voltages (Vα and Vβ). The inverse Park transform block 530 outputs the simplified α-β orthogonal voltages (V_{α} and V_{β}) to a PWM control block 535. The PWM control block 535 generates PWM control signals based on the input orthogonal voltage (V_{α} and V_{β}). The PWM control block 535 outputs the PWM control signals to the PWM generator 450. The PWM generator 450 transforms the PWM control signals into six separate voltage switching signals, i.e., PWM signals. The PWM signals have a frequency of at least 50 kHz. In some embodiments, the frequency of the PWM signals is less than 250 kHz. In some examples, the PWM control block 535 may be integrated into an external component or may be integrated into the PWM generator 450, such that the controller provides the α-β orthogonal voltages (V_{α} and V_{β}) directly to the PWM generator 450.

In the illustrated example, the controller topology 500 operates different control portions at different frequencies. For example, the position sensing components, including the sensor decoder 575 and speed measurement block 590, may operate over a period of the PWM commutation cycle. An external input portion configured to receive commands from a user may operate at a much lower frequency. The current sampler 595 may operate at a multiple of the PWM switching frequency, as further described below.

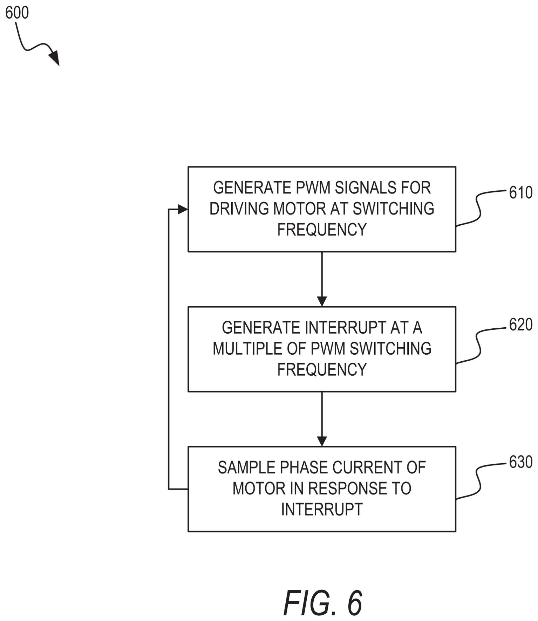

FIG. 6 is a flowchart of a method 600 for controlling the motor 305 of the power tool 100. The method 600 may be implemented by, for example, the control systems described in FIGS. 3-5. In the example illustrated, the method 600 includes generating, using the controller 300, PWM signals for driving the motor 305 using the power switching network 350 at a PWM switching frequency (at block 610). In one example, the controller 300 generates the PWM signals using FOC, as described above with respect to FIG. 5. The PWM signals are generated at a PWM switching frequency of at least 50 kHz. In some examples, the PWM switching frequency is between 50 kHz and 250 kHz. The PWM switching frequency is above a maximum switching frequency of MOSFETs. In some examples, the PWM switching frequency is about 400 kHz.

The method 600 includes generating, using the PWM generator 450 or another controller peripheral, an interrupt at a multiple of the PWM switching frequency (at block 620). The PWM counter 460 counts the PWM cycle of the PWM signals and triggers an interrupt signal. In one example, the interrupt signal may occur in the middle of the PWM period. Triggering the interrupt signal in the middle of the PWM period ensures that settled current values are measured. The process of triggering an interrupt may occur every time the PWM counter period value is reached. That is, the interrupt is generated after each multiple of the PWM switching frequency is reached. The interrupt occurs at a rate at which the PWM counter period value is reached two or more times. That is, the multiple is an integer greater than 1. As explained above, the PWM counter 460 may be integrated into the PWM generator 450, into another controller peripheral device, or be provided as a separate peripheral of the controller 300.

The method 600 includes sampling, using the current sense ADC 455, a current in response to receiving the interrupt (at block 630). The current sense ADC 455 or the current sampler 595 of the controller 300 may sample the current, for example, only in response to receiving the interrupt.

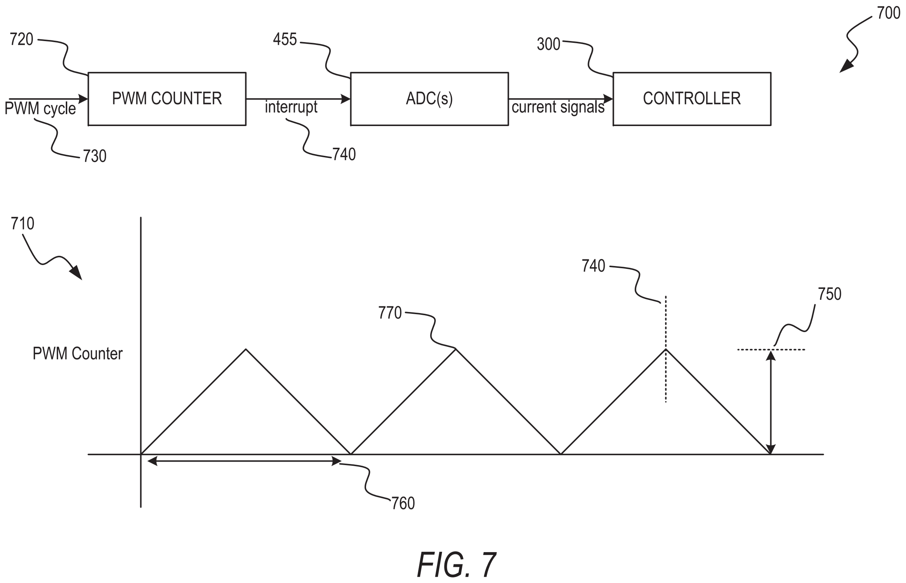

FIG. 7 is a block diagram depicting a method 700 for sampling CURRENT and a graph 710 depicting a PWM counter, according to some embodiments. A PWM counter 720 (e.g., PWM counter 460, PWM generator 450, etc.) is a peripheral component of a controller 300 configured to count a PWM cycle 730 of the PWM generator 450 and trigger an interrupt signal (e.g., interrupt 740). The interrupt 740 is recognized by the controller 300 (or current sense ADC 455) to start sampling the current of the motor. In one example, the interrupt is received by the controller 300 before being forwarded to the current sense ADC 455. In one example, the PWM control of the motor is configured in a way that when the PWM counter reaches a PWM counter period value 750 (e.g., set to the PWM switching frequency or clock frequency), sampling of the current of the motor through one or more current sensor(s) may be triggered (that is, SSSU current sampling). In one example, current is detected at least once for every PWM time period 760. In other examples, like the one depicted in graph 710, the PWM control of the motor is configured in a way that sampling of the current of the motor through the one or more current sensor(s) is triggered when the PWM counter reaches a multiple (that is, an integer multiple greater than one) of the PWM counter period value 750 (e.g., set to the PWM switching frequency or clock frequency) (that is, SSMU current sampling). The interrupt signal may be generated in the middle of the PWM time period 760 (e.g., peak 770) such that the current values are settled (i.e., no switching transients) before being measured.

Once the ADC(s) 455 completes sampling of the motor current, the collected samples are processed by the controller 300 as described with respect to FIG. 5. By sampling the currents using SSMU as described above, the load on the controller 300 may be reduced when combined with the high-frequency operation of the GaN FETs. This opens up options for the type of controller 300 that may be used. For example, the controller 300 may be implemented using Cortex M-Series^{™} architecture, C2000^{™} architecture, or the like.

Thus, embodiments described herein provide, among other things, motor drives for a power tool. Various features and advantages are set forth in the following claims.

## Claims

1. A power tool comprising:
a motor;
a power input;
a power switching network electrically connected between the power input and the motor and including a plurality of wide bandgap semiconductor (WBS) field effect transistors (FETs);
a controller electrically connected to a power switching network and configured to drive the motor using the power switching network; and
a pulse width modulation (PWM) generator electrically connected between the controller and the power switching network and configured to generate PWM signals for driving the motor using the power switching network at a PWM switching frequency,
wherein the PWM generator or another controller peripheral is configured to generate an interrupt at a multiple of the PWM switching frequency,
wherein the controller or a current sense analog-to-digital converter (ADC) electrically connected to a current sensor of the power tool is configured to:
receive the interrupt; and
sample a current in response to receiving the interrupt.

2. The power tool of claim 1, wherein the plurality of WBS FETs includes Gallium Nitride (GaN) high electron mobility transistors (HEMTs).

3. The power tool of claim 1 or 2, further comprising a multilayer ceramic capacitor on a DC link of the power switching network.

4. The power tool of one of claims 1-3, wherein the multiple is a positive integer greater than 1.

5. The power tool of one of claims 1-4, wherein the PWM switching frequency is at least 50 kHz and/or wherein the PWM switching frequency is between 50 kHz and 250 kHz.

6. The power tool of one of claims 1-5, wherein the controller is configured to drive the motor using field-oriented control and/or wherein the motor is a sensorless motor.

7. A method for controlling a motor of a power tool comprising:
generating, using a pulse width modulation (PWM) generator of the power tool, PWM signals for driving the motor using a power switching network at a PWM switching frequency, the power switching network including a plurality of wide bandgap semiconductor (WBS) field effect transistors (FETs);
generating, using the PWM generator or another controller peripheral of the power tool, an interrupt at a multiple of the PWM switching frequency; and
sampling, using a current sense analog-to-digital converter connected to a current sensor of the power tool, a current in response to receiving the interrupt.

8. The method of claim 7, wherein the plurality of WBS FETs includes Gallium Nitride (GaN) high electron mobility transistors (HEMTs).

9. The method of claims 7-8, wherein the multiple is a positive integer greater than 1.

10. The method of one of claims 7-9, wherein the PWM switching frequency is at least 50 kHz and/or wherein the PWM switching frequency is between 50 kHz and 250 kHz.

11. The method of one of claims 7-10, wherein the motor is driven using field-oriented control.

12. A power tool comprising:
a motor;
a power input;
a power switching network electrically connected between the power input and the motor and including a plurality of switches;
a controller electrically connected to a power switching network and configured to drive the motor using the power switching network; and
a pulse width modulation (PWM) generator electrically connected between the controller and the power switching network and configured to generate PWM signals for driving the motor using the power switching network, the PWM signals configured to switch the plurality of switches at a PWM switching frequency of at least 50 kHz,
wherein the PWM generator or another controller peripheral is configured to generate an interrupt at a multiple of the PWM switching frequency,
wherein the controller or a current sense analog-to-digital converter (ADC) electrically connected to a current sensor of the power tool is configured to:
receive the interrupt; and
sample a current in response to receiving the interrupt.

13. The power tool of claim 12, wherein the plurality of switches includes a plurality of Gallium Nitride (GaN) high electron mobility transistors (HEMTs).

14. The power tool of claim 12 or 13, further comprising a multilayer ceramic capacitor on a DC link of the power switching network and/or wherein the multiple is a positive integer greater than 1.

15. The power tool of one of claims 12-14, wherein the controller is configured to drive the motor using field-oriented control and/or wherein the motor is a sensorless motor.
